**Europäisches Patentamt**

**European Patent Office**

**Office européen des brevets**

(19)

(11) **EP 1 737 155 A1**

(12) # EUROPEAN PATENT APPLICATION

(43) Date of publication:
**27.12.2006 Bulletin 2006/52**

(51) Int Cl.:
**H04L 5/02** *(2006.01)*

(21) Application number: **06013031.7**

(22) Date of filing: **23.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **23.06.2005 KR 20050054290**

(71) Applicant: **Samsung Electronics Co., Ltd.**
**Suwon-si, Gyeonggi-Do (KR)**

(72) Inventors:
 • **Chang, Young-Bin**
  **Dongan-gu,**
  **Anyang-si,**
  **Gyeonggi-do (KR)**
 • **Ro, Jung-Min**
  **Gangnam-gu,**
  **Seoul (KR)**
 • **Cho, Young-Kwon**
  **249-1204, Ssangyong APT,**
  **Yeongtong-gu**
  **Suwon-si**
  **Gyeonggi-do (KR)**

 • **Park, Dong-Seek**
  **Kiheung-eub,**
  **Yongin-si,**
  **Gyeonggi-do (KR)**
 • **Lim, Eun-Taek**
  **Kwonseon-gu,**
  **Suwon-si,**
  **Gyeonggi-do (KR)**
 • **Kim, Young-Kyun**
  **Bundang-gu,**
  **Seongnam-si,**
  **Gyeonggi-do (KR)**
 • **Choi, Joon-Young**
  **Yeongtong-gu,**
  **Suwon-si,**
  **Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for configuring frame in a broadband wireless communication system**

(57) There is provided a transmitting apparatus in a broadband wireless communication system in which a control channel generator generates a control channel that includes an user information and a resource group information allocated to the user based on position and number of at least one predetermined resource unit included in the resource group which consists of at least one predetermined resource unit and a channel generator for allocating the data to resources according to the control channel, and a method thereof. Also, there is pro-vided a receiving apparatus in response to the transmit-ting apparatus and a method thereof.

FIG.2

**Description**

**PRIORITY**

This application claims priority under 35 U.S.C. § 119 to an application entitled "Apparatus and Method for Configuring Frame in a Broadband Wireless Communication System" filed in the Korean Intellectual Property Office on June 23, 2005 and assigned Serial No. 2005-54290, the contents of which are incorporated herein by reference.

**BACKGROUND OF THE INVENTION**

1. Field of the Invention

The present invention relates generally to an apparatus and method for configuring a frame in a broadband wireless communication system, and in particular, to a method of configuring a frame to reduce MAP channel information in an Orthogonal Frequency Division Multiplexing (OFDM) broadband wireless communication system, and a transmitting/receiving apparatus using the same.

2. Description of the Related Art

Today, many wireless communication technologies are available for high-speed mobile communications of which OFDM is most promising for future-generation wireless communications. It is expected that by year 2010, OFDM will be in most of $4^{th}$ Generation (4G) wireless communication technologies. Also, OFDM was incorporated in the Wireless Metropolitan Area Network (WMAN) standard of an Institute of Electrical and Electronics Engineers (IEEE) 802.16 family classified as 3.5G technology.

The major IEEE 802.16 standards for wireless communication are 802.16d and 802.16e. These two standards support three modulation schemes including single carrier, OFDM, and Orthogonal Frequency Division Multiple Access (OFDMA).

The 802.16d and 802.16e OFDMA standards define downlink and uplink frame structures based on time-frequency resources and radio channel allocation according to a variable radio channel environment, for the purpose of effective transmission of digital bit information to a receiver.

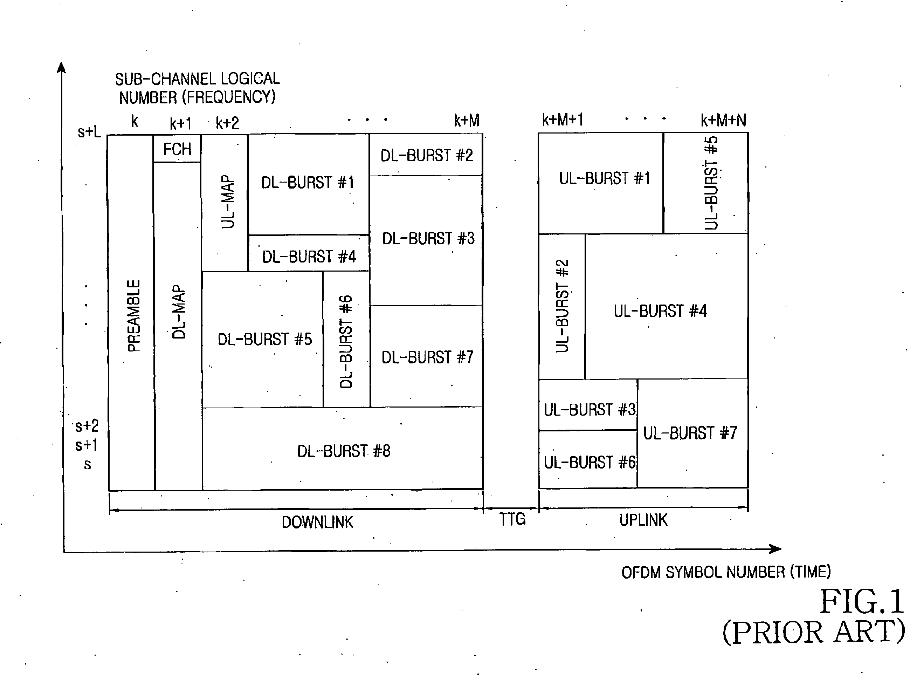

FIG 1 illustrates the structure of an OFDMA frame in compliance with IEEE 802.16d and 802.16e standards. The following description is made with the appreciation that conceptual time and frequency data units are subchannel and symbol, respectively, and a minimum data unit for one user is defined by one subchannel and one symbol. The vertical axis represents L frequency resource units, i.e. L subchannels numbered from s to (s+L), and the horizontal axis represents time resource units, i.e. OFDM symbols divided into M downlink OFDM symbols numbered from k to (k+M) and N uplink OFDM symbols numbered from (k+M+1) to (k+M+N). A Transmit/Receive Transition Gap (TTG) intervenes as a time guard region between the downlink and uplink OFDM symbols.

Referring to FIG 1, an OFDMA frame includes a Preamble, a Frame Control Header (FCH), a downlink (DL)-MAP, an uplink (UL)-MAP, and DL-Bursts for the downlink, and UL-Bursts for the uplink.

The Preamble is used for acquiring timing and frequency synchronization as well as cell information. The FCH provides required information for DL-MAP decoding. The DL-MAP includes information about users to receive DL-Bursts with actual information data transmitted from a Base Station (BS), and information about the positions of the DL-Bursts.

The UL-Bursts carry actual data information from users, i.e. Mobile Stations (MSs). The UL-MAP indicates MSs to transmit uplink data and positions of a frame at which they are supposed to transmit the uplink data, as set by the BS.

At least one subchannel and at least one symbol are taken to transmit one DL-Burst or one UL-Burst. Since symbols are physically arranged in time sequence, a $k^{th}$ symbol is followed by a $(k+1)^{th}$ symbol and finally by a $(k+M+N)^{th}$ symbol. In contrast, an $s^{th}$ subchannel and an $(s+1)^{th}$ subchannel can be physically adjacent or not because the OFDM subcarriers of a subchannel are logically rearranged, where they are not successively physically adjacent due to the frequency selective nature of a radio channel when the subchannel experiences the radio channel in OFDM.

Physical subcarriers are mapped to a subchannel in order to form a logical subchannel. This is called subchannel allocation. The IEEE 802.16 OFDMA standard provides a diversity subchannel allocation scheme such as Full Usage Subcarrier (FUSC) and Partial Usage Subcarrier (PUSC), as well as an Adaptive Modulation and Coding (AMC) subchannel allocation scheme.

Conceptually, the diversity subchannel allocation scheme and the AMC subchannel allocation scheme are opposites. The former seeks robustness against the frequency selectivity of the radio channel by physically scattering subcarriers in one logical subchannel. On the other hand, the latter maps physically successive subcarriers to a logical subchannel. That is, without knowledge of channel status, subcarriers are scattered to reduce data loss in the diversity subchannel allocation scheme, whereas a subchannel at a relatively good channel status is selected from among frequency selective subchannels and a modulation together with a channel coding scheme are adaptively chosen for the selected subchannel in order to transmit a large quantity of data together. Thus, frequency efficiency increases in the AMC subchannel allocation scheme.

In IEEE 802.16 OFDMA standard, as described above, a frame is so configured as to maximize freedom of channel allocation by enabling selection of a subchannel allocation scheme according to a radio channel condition and by enabling transmission of data in a subchannel-by-subchannel basis and on a time symbol-by-time symbol basis for flexible layout of DL-Bursts and UL-Bursts in the frame.

However, control information simultaneously increases in amount with the greater freedom. Where data for a plurality of users exists in a frame, information indicating the positions of the data to the users in a DL-MAP and a UL-MAP adds considerable overhead costs. Given a bandwidth of 10MHz and a 2048-Fast Fourier Transform (FFT) in OFDMA, for example, a total of 43 bits (=a 16-bit Call Identity (CID)+ 14-bit information indicating a data start point+13-bit information about a data size) are taken to indicate the position of data in a frame to a single user by a DL-MAP. If information regarding a subchannel allocation scheme and other necessary control information are included, the amount of information becomes considerably large. Moreover, the amount of MAP information increases as the number of users increases, thereby limiting the amount of transmitted data.

## SUMMARY OF THE INVENTION

Therefore, an aspectof the present invention is to substantially solve at least the above problems and/or disadvantages and to provide at least the advantages described below. Accordingly, an aspectof the present invention is to provide an apparatus and method for efficiently allocating time-frequency wireless resources in order to effectively provide wireless high-speed multimedia data to users in a broadband wireless communication system.

Another aspect of the present invention is to provide an apparatus and method for efficiently allocating wireless resources with minimal amount of control information in a broadband wireless communication system.

A further aspectof the present invention is to provide an apparatus and method for minimizing the amount of control information by use of fixed resource groups in a broadband wireless communication system.

The above aspect are achieved by providing a method of configuring a frame to reduce MAP channel information in a broadband wireless communication system, and a transmitting/receiving apparatus using the same.

According to one aspect of the present invention, a transmitter in a broadband wireless communication system comprises a control channel generator for generating a control channel that includes an user information and a resource group information allocated to the user based on position and number of at least one predetermined resource unit included in the resource group which consists of at least one predetermined resource unit, and a channel generator for allocating the data to resources according to the control channel.

According to another aspect of the present invention, a receiver in a broadband wireless communication system comprises a control channel recoverer for recovering a control channel from a received frame and acquiring an user information and a resource group information to which data for the user is allocated based on position and number of at least one predetermined resource unit included in the resource group which consists of at least one predetermined resource unit, and a channel receiver for receiving the data corresponding to the user information and the resource group information.

According to a further aspect of the present invention, a transmission method in a broadband wireless communication system comprises the steps of generating a control channel including an user information and a resource group information allocated to the user based on position and number of at least one predetermined resource unit included in the resource group which consists of at least one predetermined resource unit, and allocating the data to resources corresponding to the resource group information.

According to yet still another aspect of the present invention, a reception method in a broadband wireless communication system comprises the steps of recovering a control channel from a received frame and acquiring an user information and a resource group information to which data for the user is allocated, and receiving the data according to the user information and the at least one resource group information.

## BRIEF DESCRIPTION OF THE DRAWINGS

The above and other objects, features and advantages of the present invention will become more apparent from the following detailed description when taken in conjunction with the accompanying drawings in which:

FIG. 1 illustrates the structure of an OFDM frame in compliance with IEEE 802.16d/e;
FIG. 2 illustrates a frame structure according to the present invention;
FIG. 3 illustrates a channel configuration using fixed resource units according to an embodiment of the present invention;

FIG. 4 illustrates an example of the channel configuration illustrated in FIG. 3;

FIG. 5 illustrates a hierarchical structure of a transmitter and a receiver supporting a multiple access scheme according to the present invention;

FIG. 6A is a block diagram illustrating a transmitter supporting the multiple access scheme according to the present invention;

FIG. 6B is a block diagram illustrating a receiver supporting the multiple access scheme according to the present invention;

FIG. 7A is a flowchart illustrating an operation for constructing channels in the transmitter according to the present invention;

FIG. 7B is a flowchart illustrating an operation for recovering channels in the receiver according to the present invention;

FIG. 8 is a flowchart illustrating an operation for configuring a MAP channel according to the present invention; and

FIG. 9 illustrates an OFDM frame structure according to of the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention is intended to provide a technique for efficiently utilizing time-frequency wireless resources for provisioning of wireless high-speed multimedia service in a broadband wireless communication system. Particularly, the present invention is directed to a frame configuring method for achieving efficient utilization of time-frequency resources by reducing MAP information and a transmitting/receiving apparatus using the same in a broadband wireless communication system. The following description is made in the context of an OFDM-based multiple access scheme, although the present invention is applicable to other multiple access schemes. Also, the diversity subchannel allocation scheme is taken as an example, to which the present invention is not limited. Thus, it is to be clearly understood that any other subchannel allocation scheme is available.

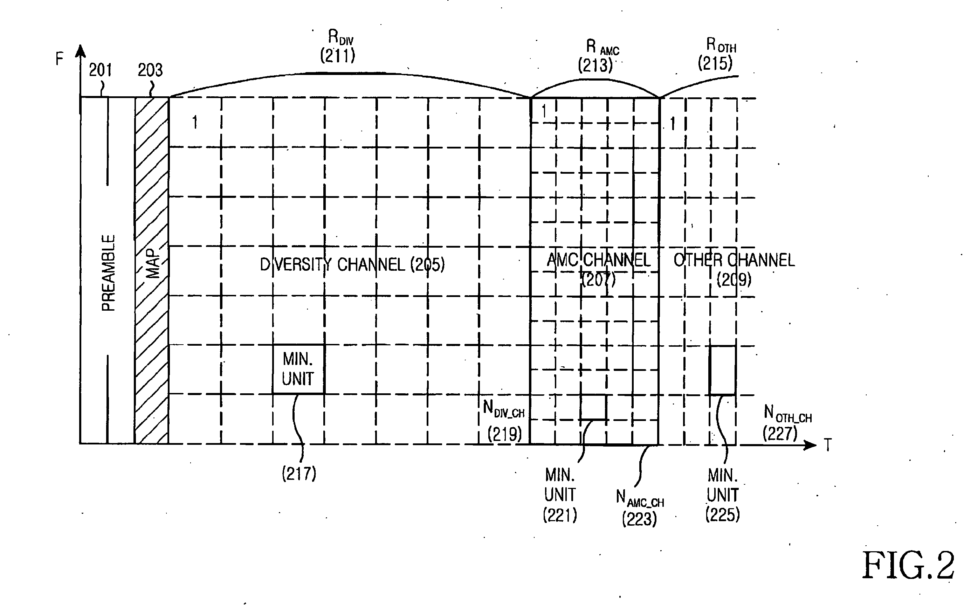

FIG. 2 illustrates a frame structure according to the present invention. The horizontal axis represents time and the vertical axis represents frequency.

Referring to FIG. 2, a frame includes a preamble channel 201, a MAP channel 203, a diversity channel 205, an AMC channel 207, and an other channel 209. The other channel 209 is a channel in use for a user other than the diversity channel and the AMC channel.

The preamble channel 201, located at the start of the frame, enables timing synchronization and provides cell information. The MAP channel 203 provides information about user IDs, the types of channels allocated to the individual users, and the numbers of resource groups allocated to the channels.

The MAP channel 203 is configured in two ways depending on how resource groups are formed according to channel types and irrespective of channel types.

Where resource groups are formed according to channel types, Table 1 illustrates the configuration of the MAP channel 203 .

Table 1

| User ID | Channel Type | Resource Group Number |
|---------|--------------|------------------------|
| $N_{ID}$ bits | $N_{ch}$ bits | $N_R = MAX(N_{R\_div}, N_{R\_AMC}, N_{R\_other})$ bits |

In Table 1, $N_{ID}$ denotes the number of bits used to represent a user ID, $N_{ch}$ denotes the number of bits used to represent a channel type. A value represented by the $N_{ch}$ bits indicates to a user which channel among a diversity channel, an AMC channel or an other channel is allocated to the user. $N_{R\_div}$, $N_{R\_AMC}$, $N_{R\_other}$ denote the numbers of bits required to represent maximum resource group numbers for the respective channels. Available resource group numbers may be the same or different for the channels. In the latter case, a resource group number is represented for each channel commonly in the maximum number of bits used to represent all resource group numbers for the channels. In the illustrated case of Table 1 above, the maximum bit number $N_R$ is commonly applied to any channel type.

In the above example where a resource group number is expressed in $N_R$ bits commonly for each channel type, the maximum amount of information that the MAP channel 203 carries is calculated by Equation (1) below:

$$T_{MAP} = \left(N_{user\_div} + N_{user\_AMC} + N_{user\_other}\right) \times \left(N_{ID} + N_{ch} + N_R\right) \qquad \dots (1)$$

where $T_{MAP}$ denotes the amount of information that the MAP channel 203 carries, $N_{user\_div}$ denotes the number of users that simultaneously use the diversity channel , $N_{user\_AMC}$ denotes the number of users that simultaneously use the AMC channel, and $N_{user\_other}$ denotes the number of users that simultaneously use the other channel.

As described above, the MAP channel 203 delivers a different amount of information according to the maximum number of users that concurrently use each of the channels. When users for each channel occupy only minimum resource units available to the channel, the transmission amount of the MAP channel information is maximized.

In the case where resource groups are formed irrespective of channel types, Table 2 illustrates the configuration of the MAP channel 203.

Table 2

| User ID | Resource Group Number |
|---------|----------------------|
| $N_{ID}$ bits | $N_R = N_{R\_tot}$ bits |

In Table 2, $N_{R\_tot}$ denotes the number of bits used to represent a resource group number when resource groups are numbered irrespective of channels.

The MAP channel 203 has the configuration illustrated in either Table 1 or Table 2 above depending on whether channel types are distinguished for users.

One of both MAP channel configurations, which requires the smaller amount of resources, is chosen for the MAP channel 203 by deciding based on Equation (2) below:

$$N_{ch} + MAX\left(N_{R\_div} + N_{R\_AMC} + N_{R\_other}\right) > N_{R\_tot} \qquad \dots (2)$$

where $N_{ch}$ denotes the number of bits used to represent a channel type, and $N_{R\_div}$, $N_{R\_AMC}$, $N_{R\_other}$ denote the numbers of bits required to represent maximum resource group numbers for the respective channels, i.e. the amount of resources needed to configure the MAP channel 203 in the manner illustrated in Table 1. $N_{R\_tot}$ denotes the amount of resources needed to configure the MAP channel 203 in the manner illustrated in Table 2.

If Equation (2) above is satisfied, the MAP channel 203 is configured as in Table 2, and otherwise, it is configured as in Table 1.

Resources are allocated to the diversity channel 205, the AMC channel 207, and the other channel 209 at a ratio of $r_{div} : r_{AMC} : r_{other}$. $r_{div}$, $r_{AMC}$ and $r_{other}$ denote the ratios of resources allocated to the three channels, respectively. The resource ratios are calculated with respect to the remaining resources except for the resources of the preamble channel 201 and the MAP channel 203. The resource ratios may be fixed or changed in each frame.

For the diversity channel 205, the size of a minimum resource unit 217 available to a user is fixed. The total number of minimum resource units 217 is $N_{div\_ch}$ 219. The minimum resource unit 217 is defined by at least one OFDM symbol and at least one subcarrier.

Table 3 illustrates the manner in which the resources of the diversity channel 205 are allocated to users.

Table 3

| Number of resources unit per resource group | 1 | 2 | 4 | 8 | 12 | 24 |
|---|---|---|---|---|---|---|
| Number of resource groups for the channel | G1 | G2 | G4 | G8 | G12 | G24 |

(continued)

| Number of resources unit per resource group | 1 | 2 | 4 | 8 | 12 | 24 |
|---|---|---|---|---|---|---|
| Resource group numbers | 1 to G1 | (G1+1) to (G1+G2) | (G1+G2 +1) to (G1+G2 +G4) | (G1+G2+G4+1) to (G1+G2+G4+G8) | (G1+G2+G4+G8+1) to (G1+G2+G4+G8+G12) | (G1+G2+G4+G8+G12+1) |

Referring to Table 3, $N_{div\_ch}$ is assumed to be 24. G1, G2, G4, G8, G12 and G24 are resource groups having 1, 2, 4, 8, 12 and 24 resource units, respectively.

The number of resource units per resource group is 1 or one of even divisors of $N_{div\_ch}$. In order to prevent a waste of resource units in the resource groups, the divisors of $N_{div\_ch}$ are selectively used according to the amount of resources allocated to users. Also, it is to be noted that an even number of resource groups each including one resource unit exist. For instance, for $N_{div\_ch}$=24, an odd number 3 is eliminated from the divisors 24, 1, 2, 4, 8, 12, 24, and 6 is then eliminated from the remaining divisors to avoid a resource unit waste.

Table 4 illustrates where $N_{div\_ch}$=24.

Table 4

| Number of resources unit per resource group | 1 | 2 | 4 | 8 | 12 | 24 |
|---|---|---|---|---|---|---|
| Number of resource groups for the channel | 24 | 12 | 6 | 3 | 2 | 1 |
| Resource group numbers | 1~24 | 25~26 | 37~42 | 43~45 | 46~47 | 48 |

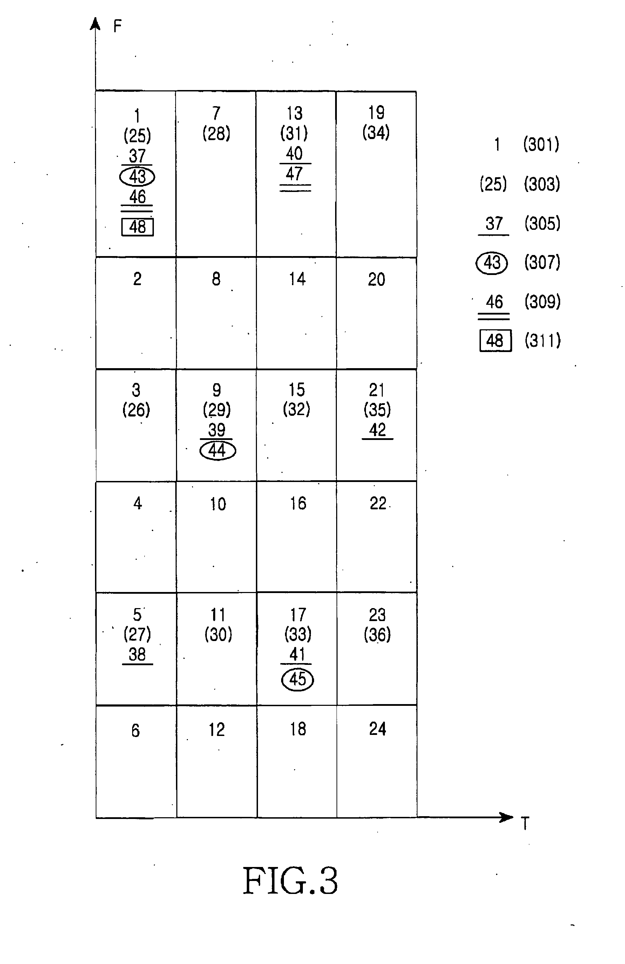

FIG. 3 illustrates a channel configuration using fixed resource units according to the present invention. The diversity channel is configured using the resource groups illustrated in Table 4, by way of example. It is assumed that each resource group includes consecutive resource units.

Referring to FIG. 3, plain numerals, 1 to 24 indicated by reference numeral 301 are resource groups numbers each including one resource unit, and bracketed numerals, (25) to (36) indicated by reference numeral 303 are resource groups numbers each including two resource units.

Underlined numerals, 37 to 42 indicated by reference numeral 305 are resource groups numbers each including four resource units, and circled numerals, 43 to 45 indicated by reference numeral 307 are resource groups numbers each including eight resource units.

Double-underlined numerals, 46 and 47 indicated by reference numeral 309 are resource group numbers each including 12 resource units, and a squared numeral 48 indicated by reference numeral 311 is a resource group number including 24 resource units.

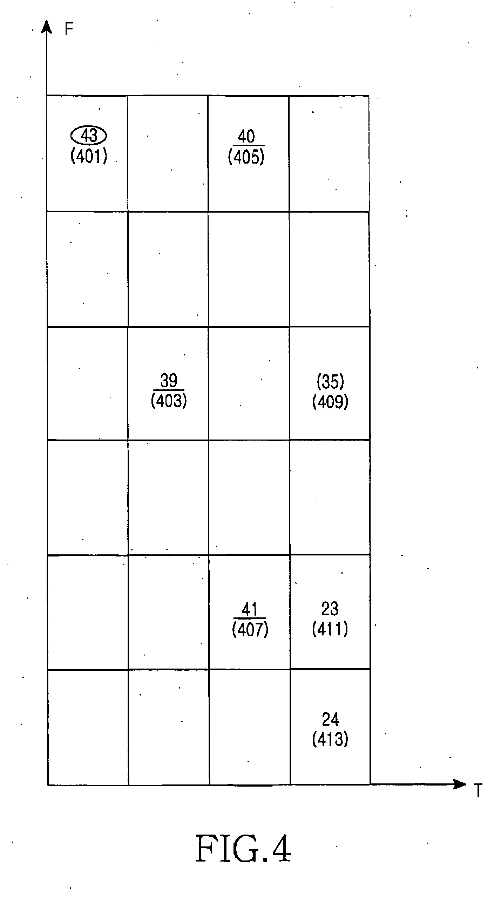

For example, a channel is configured as illustrated in FIG. 3 and the resource groups of the channel are allocated to users as illustrated in FIG. 4.

FIG. 4 illustrates an example of the channel configuration illustrated in FIG. 3.

Referring to FIG. 4, a resource group including eight resource units, circled numeral 43_is allocated to one user u1, resource groups each having four resource units underlined numerals 39, 40 and 41 are allocated to three users u2, u3 and u4, respectively, a resource group having two resource units, (35) is allocated to one user u5, and resource groups each including one resource unit, 23 and 24 are allocated to two users u6 and u7. Thus, the diversity channel is allocated to seven users in total.

While it has been described that the resource units are successively arranged, alternatively they may not. Particularly, better effects can be expected if resource units are spaced from each other by at least a coherent bandwidth and coherent time interval within a resource group, because the diversity channel is designed to avoid frequency selectivity. Also, resource groups are allocated to users in a descending order of the number of required resource units to prevent excess or shortage in resource units when a resource group is allocated to each user.

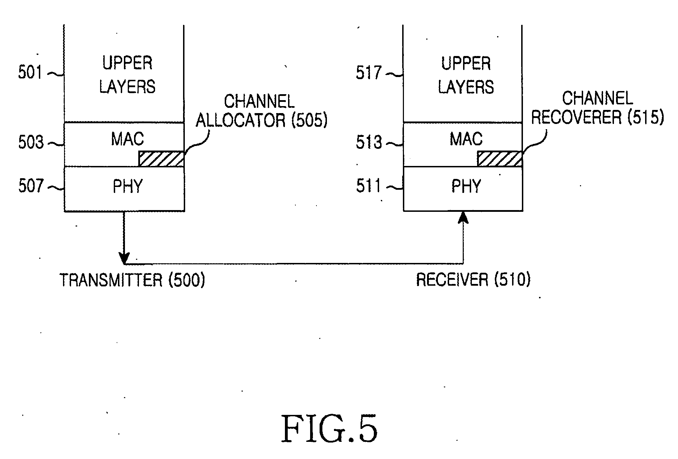

FIG. 5 illustrates a hierarchical structure of a transmitter and a receiver supporting a multiple access scheme according to an embodiment of the present invention.

Referring to FIG. 5, in a transmitter 500, information bit streams to be transmitted to users are transferred from upper layers 501 to a Media Access Control (MAC) layer 503.

The MAC layer 503 creates a MAC message using the information bit streams. A channel allocator 505 of the MAC layer 503 generates a MAP channel including the IDs of the users, the types of channels allocated to the users, and the numbers of resource groups allocated to the channels. A physical layer (PHY) 507 receives the MAC message and transmits the information bit streams to receivers 510 on the channels indicated by the MAC channel.

Upon reception of a frame from the transmitter 500, a receiver 510 acquires timing synchronization and cell information from the preamble channel of the frame. A channel recoverer 515 of a MAC layer 513 recovers the MAP channel of the frame and detects the type of a channel and a resource group number for the channel consistent with the ID of the user of the receiver 510. A physical layer 511 detects an information bit stream destined for the user according to the channel number and resource group number and provides the detected information bit stream to the MAC layer 513. The MAC layer 513 transfers the information bit stream to upper layers 817 so that it can be recovered to user data for the user.

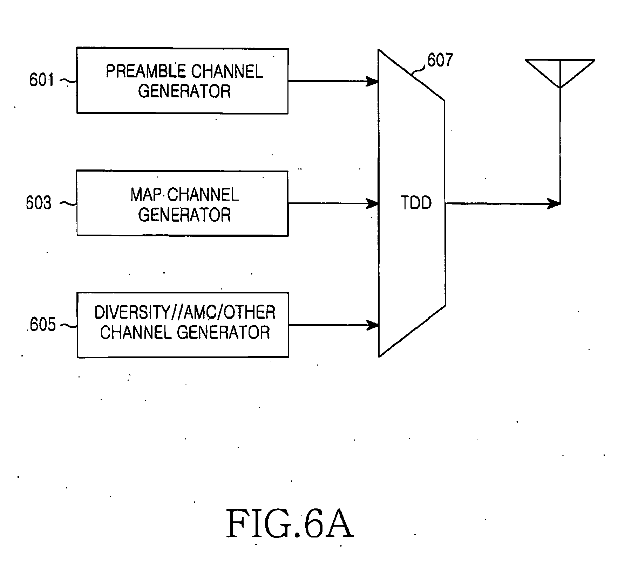

FIG. 6A is a block diagram illustrating a transmitter supporting the multiple access scheme according to the present invention. The following description is made with the appreciation that the transmitter allocates the diversity channel, the AMC channel and the other channel according to MAP channel information configured in the manner illustrated in Table 1. While channels are transmitted in frequency division or in time division, time division is taken herein by way of example.

Referring to FIG. 6A, the transmitter includes a preamble channel generator 601, a MAP channel generator 603, a diversity/AMC/other channel generator 605, and a Time Division Duplexer (TDD) 607.

The preamble channel generator 601 generates a preamble channel by which the receiver can acquire timing synchronization and cell information. The MAP channel generator 603 generates a MAP channel composed of the IDs of users to receive information bit streams, the types of channels allocated to the information bit streams, and resource group numbers used for the channels.

The diversity/AMC/other channel generator 605 generates data channels by mapping the information bit streams to the allocated channels and resource group numbers.

The TDD 607 forms a frame by outputting the preamble channel, the MAP channel, and the diversity, AMC, and other channels received from the preamble channel generator 601, the MAP channel generator 603, and the diversity/AMC/other channel generator 605.

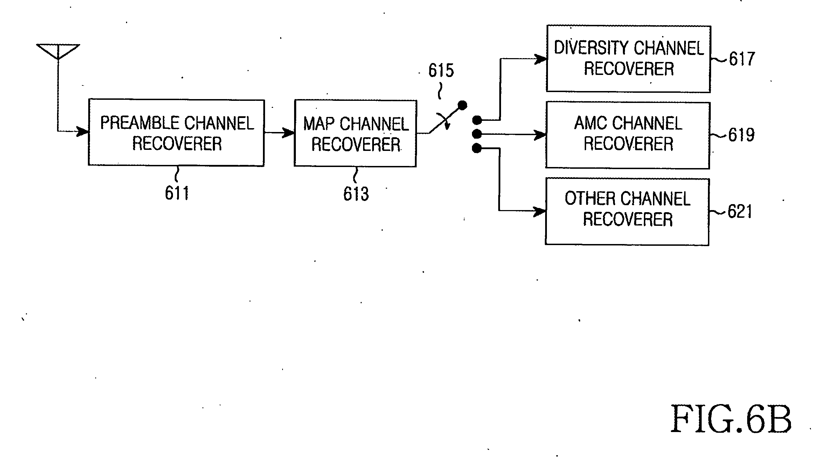

FIG. 6B is a block diagram illustrating a receiver supporting the multiple access scheme according to the present invention.

Referring to FIG. 6B, the receiver includes a preamble channel recoverer 611, a MAP channel recoverer 613, a channel selector 615, a diversity channel recoverer 617, an AMC channel recoverer 619, and an other channel recovered 621.

Upon reception of a frame from the transmitter, the receiver sequentially recovers channels included in the frame. The preamble channel recoverer 611 first recovers a preamble channel and obtains timing synchronization and a cell ID. The MAP channel recoverer 613 recovers information about the type of a channel that delivers data for the user of the receiver and information about a time-frequency position at which the data is transmitted.

Upon reception of the channel type information from the MAP channel recoverer 613, the channel selector 615 provides the data to the diversity channel recoverer 617, the AMC channel recoverer 619, or the other channel recovered consistent with the channel type information. Each channel recoverer 617, 619 or 621 recovers the received data according to the time-frequency area of the data notified by the MAP channel recoverer 613.

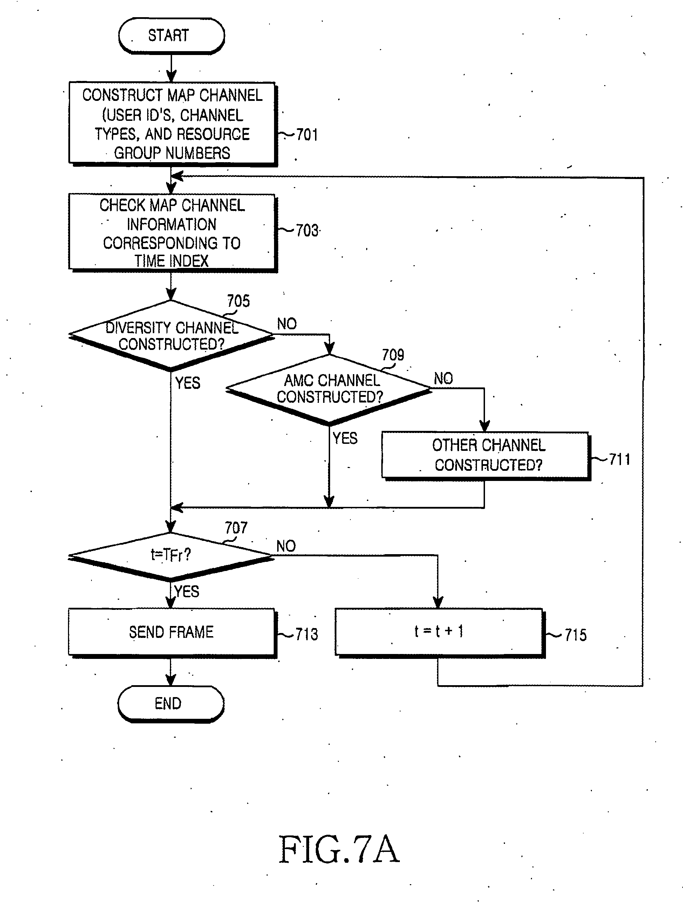

FIG. 7A is a flowchart illustrating an operation for constructing channels in the transmitter according to the present invention. It is assumed that the MAP channel is configured in the manner illustrated in Table 1 above herein.

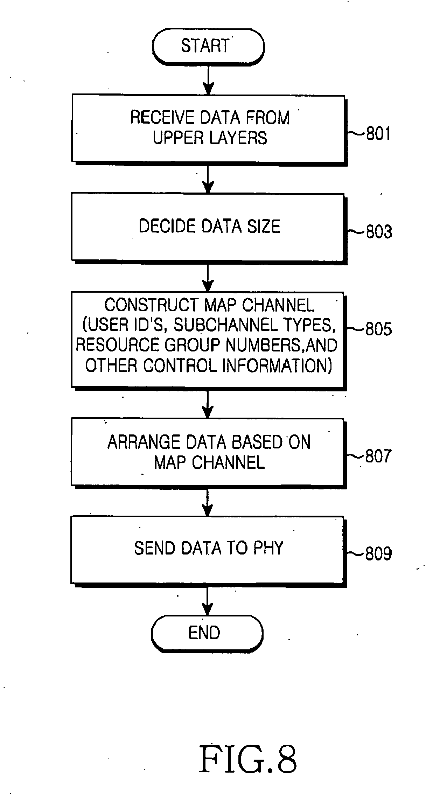

Referring to FIG. 7A, in order to transmit information bit streams to users, the transmitter configures a MAP channel with the IDs of the users, the types of channels allocated to the users, and resource group numbers allocated to the channels (for details, see FIG. 8) in step 701. A time index t is set to an initial value 0 at the same time.

In step 703, the transmitter checks MAP channel information corresponding to the current time index, i.e. a channel type and resource group numbers.

In the case of a diversity channel, the transmitter constructs the diversity channel by allocating the information bit streams to the resource group numbers of the diversity channel in step 705. In the case of an AMC channel, the transmitter constructs the AMC channel by allocating the information bit streams to the resource group numbers of the AMC channel in step 709. In the case of an other channel, the transmitter constructs the other channel by allocating the information bit streams to the resource group numbers of the other channel in step 711.

After completing channel construction according to the channel types, the transmitter determines whether t is equal to the length of the frame, $T_{Fr}$ in step 707. If t is less than $T_{Fr}$ ($t \neq T_{Fr}$), the transmitter increases t by 1 (t=t+1) in step 715 and returns to step 703.

On the contrary, if t is equal to $T_{Fr}$ ($t=T_{Fr}$), the transmitter transmits the frame to the receiver in step 713 and ends the algorithm.

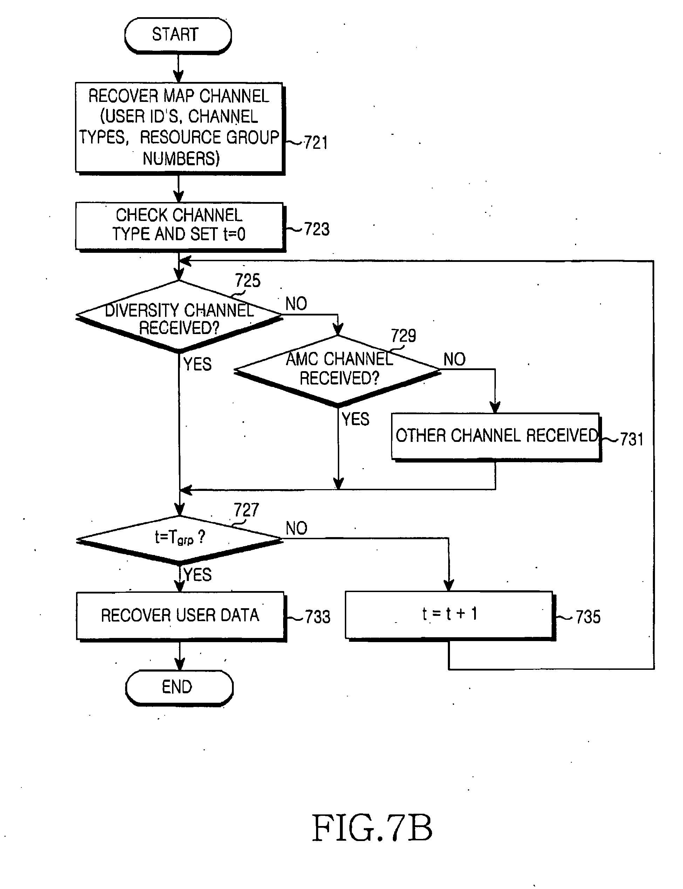

FIG. 7B is a flowchart illustrating an operation for recovering channels in the receiver according to the present invention.

Referring to FIG. 7B, to recover data for the user from a received frame, the receiver recovers a MAP channel in the received frame, which includes user IDs, channel types for users, and resource group numbers of the channel types in step 721.

In step 723, the receiver determines a channel type allocated to the user from the recovered MAP channel. In the case of a diversity channel, the receiver receives the diversity channel, starting from a relative time index t=0 within the diversity channel in step 725.

In the case of an AMC channel, the receiver receives the AMC channel, starting from a relative time index t=0 within the diversity channel in step 729. In the case of an other channel, the receiver receives the diversity channel, starting from a relative time index t=0 within the other channel in step 731.

After receiving the channel, the receiver compares the relative time index within the channel, t with the time index $T_{grp}$ of the resource group number recovered in step 721, i.e. $T_{grp\_D}$ for the diversity channel, $T_{grp\_A}$ for the AMC channel, or $T_{grp\_o}$ for the other channel in step 727. If t is less than $T_{grp}$ ($t \neq T_{grp}$), the receiver increases t by 1 (t=t+1) in step 735 and returns to step 725.

If t is equal to $T_{grp}$ ($t = T_{grp}$), the receiver recovers user data in the resource group number of the channel in step 733 and ends the algorithm.

FIG. 8 is a flowchart illustrating an operation for configuring the MAP channel according to the present invention. It is assumed that the MAP channel is configured in the manner illustrated in Table 1 above herein.

Referring to FIG. 8, upon reception of data destined for users from an upper layer in step 801, the transmitter determines a data amount suitable for transmission in a frame, to which the data is segmented in step 803. In step 805, the transmitter determines resource groups corresponding to the data amount among fixed resource groups, and constructs a MAP channel with the IDs of the users, the types of channels to deliver the data, and other control information.

In step 807, the transmitter allocates the data to corresponding resource group numbers according to the MAP channel information and arranges the transmission data in the frame. The transmitter then transmits the frame to the physical channel in step 809 and ends the algorithm.

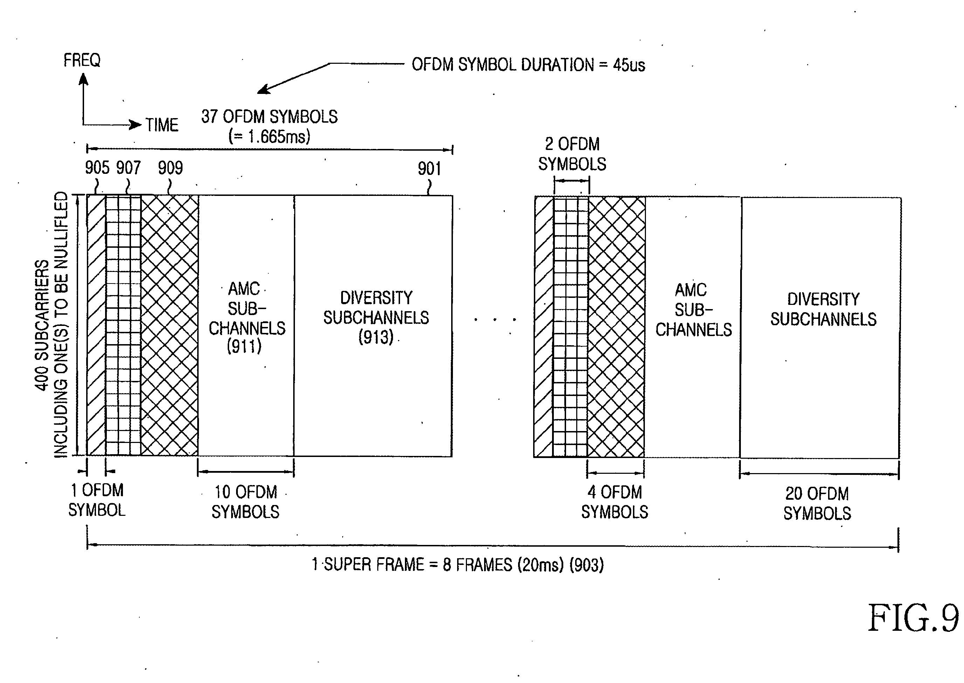

FIG. 9 illustrates an OFDM frame structure according the present invention. A downlink subframe in the OFDM frame structure will be described below. It is assumed that an uplink subframe is similar to the downlink subframe in configuration. The vertical axis represents frequency and the horizontal axis represents time in an OFDM frame.

Referring to FIG. 9, one OFDM symbol is 45μs in duration. For FFT=512, the number of the remaining subcarriers except for guard subcarriers is 400. One OFDM frame is divided into an uplink subframe with 16 OFDM symbols, a downlink subframe 901 with 37 OFDM symbols, and a TTG between the subframes. Each frame is 2.5ms in duration and the downlink subframe 901 is 1.665ms in duration. Eight frames form one superframe 903 of 20ms. Aside from a frame, a superframe can be used as a basic unit for information transmission.

Regarding the structure of the downlink subframe 901, the first symbol of the downlink subframe 901 serves as a preamble 905 for timing and frequency synchronization. The two symbols 907 following after the preamble 905 are used to deliver system information. The symbol period of the two symbols 907 delivers a BS ID and a MAP index preset between a BS and an MS. According to the MAP index, allocation of system control information and data to time-frequency resources are defined.

Four symbols 909 following the two symbols 907 carry MAP information for providing control information about data allocation for each user. The MAP information 909 includes user IDs, adaptive link and control information, and information about the indexes of subcarrier groups allocated to the users, illustrated in FIG. 3. The MAP information 909 is accompanied by downlink symbols carrying actual downlink data. In the illustrated case of FIG. 9, among 30 remaining downlink symbols except for the preamble 905, the two symbols 907, and the MAP information 909, the following 10 symbols form AMC subchannels 911 and the next 20 symbols are allocated to diversity subchannels 913. The ratio between the AMC subchannels and the diversity subchannels can be changed, as stated before, and the ratio is notified to MSs by system information in the two symbols 907.

Now a description will be made of a subchannel allocation in the downlink frame. Irrespective of the AMC or diversity channel, at least 96 data information bits are provided to the physical layer before channel coding. Given rate 1/3 channel coding and Quadrature Phase Shift Keying (QPSK), the transmission data is modulated to 144 bits (=96x3/2). A minimum unit of the AMC and diversity subchannel periods is at least one symbol in time and at least one subchannel in frequency. In real implementation, subcarriers except for DC and null subcarriers, and pilot subcarriers among 400 subcarriers are available for data transmission. The DC and null subcarriers may vary in each symbol. Table 5 below lists the indexes of DC or null subcarriers and the resulting number of available data subcarriers. 30 symbols are indexed from 7 to 36 and 400 subcarriers are indexed from -200 to +199.

Table 5

| | OFDM symbol index | Number of available data subcarriers | Indexes of DC or null subcarriers |
|---|---|---|---|
| AMC subchannels | 8, 9, 10, 11, 13, 14, 15, 16 | 346 | +1, 0, -1, -200 |
| | 7, 12 | 344 | +199, +1, 0, -1, -199, -200 |
| Diversity subchannels | 17, 18, 19, 20, 22, 23, 24, 25, 27, 28, 29, 30, 32, 33, 34, 35 | 346 | +1, 0, -1, -200 |
| | 21, 26, 31, 36 | 344 | +199, +1, 0, -1, -199, -200 |

Referring to FIG. 5, the AMC subchannels occupy eight symbols each having 346 data subcarriers, and two symbols each having 344 symbols. Hence, a total of 3456 ((346x8)+(344x2)) data subcarriers form up to 24 AMC subchannels (3456/144).

Since the diversity subchannels occupy 16 symbols each having 346 data subcarriers, and 4 symbols each having 344 symbols. Hence, a total of 6912 ((346x16)+(344x4)) data subcarriers form up to 48 diversity subchannels (6912/144).

Table 6 below illustrates a numerical example of allocating AMC subchannels and diversity subchannels to users in a predetermined rule to reduce the amount of MAP information to be transmitted to the users according to the present invention.

Table 6

| | Number of available subchannels per user | Indexes of subchannels for subchannel group | Number of subchannel groups | Data packet size (bytes) per subchannel group |
|---|---|---|---|---|
| Diversity subchannels | 1 | [0], [1],..., [47] | 48 | 12 |
| | 4 | [0, 12, 24, 36], [1, 13, 25, 37], ..., [11, 23, 35, 47] | 12 | 48 |
| | 8 | [0, 6, 12, 18, 24, 30, 36, 42], [1, 7, 13, 19, 25, 31, 37, 43], ..., [5, 11, 17, 23, 29, 35, 41, 47] | 6 | 96 |
| | 16 | [0, 3, 6, ..., 45], [1, 4, 7, ..., 46], [2, 5, 8, ..., 47] | 3 | 192 |
| | 24 | [0, 2, 4, ..., 46], [1, 3, 5, ..., 47] | 2 | 288 |
| | 48 | [0, 1, 2, ..., 47] | 1 | 576 |

(continued)

|  | Number of available subchannels per user | Indexes of subchannels for subchannel group | Number of subchannel groups | Data packet size (bytes) per subchannel group |
|---|---|---|---|---|
| AMC subchannels | 1 | [0], [1], ..., [23] | 24 | 12 |
|  | 2 | [0, 1], [2, 3], ..., [22, 23] | 12 | 24 |
|  | 4 | [0, 1, 2, 3], [4, 5, 6, 7], ..., [20, 21, 22, 23] | 6 | 48 |
|  | 8 | [0, 1, 2, ..., 7], [8, 9, 10, ..., 15], [16, 17, 18, ..., 23] | 3 | 96 |
|  | 12 | [0, 1, 2, ..., 11], [12, 13, 14, ..., 23] | 2 | 144 |
|  | 24 | [0, 1, 2, ..., 23] | 1 | 288 |
| Sum |  |  | 120 |  |

The resource allocation shown in Table 5 above herein is carried out on a subcarrier group basis, as illustrated in FIG. 3. 72 cases of resource allocation are available for the diversity channel and 48 cases for the AMC channel. Hence, 120 cases of resource allocation in total are possible. Then 7 ($2^7=128$) bits are required to represent control information indicating a subcarrier group allocated to a user in a frame.

As described above, the present invention advantageously enables efficient utilization of time-frequency resources by reducing the amount of MAP channel information through the use of fixed resource groups in a broadband wireless communication system. As a consequence, high-speed wireless multimedia service that the broadband wireless communication system aims at can be efficiently provided.

While the invention has been shown and described with reference to certain preferred embodiments thereof, it will be understood by those skilled in the art that various changes in form and details may be made therein without departing from the spirit and scope of the invention as defined by the appended claims.

**Claims**

1.   A transmitter in a broadband wireless communication system comprising:

a control channel generator for generating a control channel that includes an user information and a resource group information allocated to the user based on position and number of at least one predetermined resource unit included in the resource group which consists of at least one predetermined resource unit ; and
a channel generator for allocating the data to resources according to the control channel.

2.   The transmitter of claim 1, wherein the transmitter has total time-frequency resources consisting of at least one predetermined resource units, the at least one predetermined resource unit is grouped into at least one resource group, and each of the at least one resource group is identified with a resource group information according to the position and the number of the at least one predetermined resource unit included in each of the at least one resource group.

3.   The transmitter of claim 1, wherein the control channel is MAP channel for time -frequency resource allocation.

4.   The transmitter of claim 2, wherein the at least one resource group information is sequentially allocated to the total time-frequency resources.

5.   The transmitter of claim 1, wherein the number of the at least one predetermined resource unit in each of the at least one resource group is one of 1 and an even-divisor of the number of total fixed resource units.

6.   The transmitter of claim 2, wherein the control channel further includes information about the type of a multiple access channel allocated to the user.

7. The transmitter of claim 6, wherein the total time-frequency resources are divided according to multiple access channels and the resource group information is allocated independently for the individual multiple access channels.

8. The transmitter of claim 6, wherein the at least one resource group information is sequentially allocated for each of the multiple access channels.

9. The transmitter of claim 6, wherein the number of at least one predetermined resource unit in each of the at least one resource group is one of 1 and an even-divisor of the number of total predetermined resource units included in the each multiple access channel.

10. The transmitter of claim 6, wherein the multiple access channel is one of a diversity channel and an adaptive modulation and coding (AMC) channel.

11. The transmitter of claim 1, wherein the at least one predetermined resource unit included in each of the at least one resource group are successive or non-successive.

12. A receiver in a broadband wireless communication system comprising:

a control channel recoverer for recovering a control channel from a received frame and acquiring an user information and a resource group information to which data for the user is allocated based on position and number of at least one predetermined resource unit included in the resource group which consists of at least one predetermined resource unit; and
a channel receiver for receiving the data corresponding to the user information and the resource group information.

13. The receiver of claim 12, wherein the receiver has total time-frequency resources consisting of at least one predetermined resource units, the at least one predetermined resource unit is grouped into at least one resource group, and each of the at least one resource group is identified with a resource group information according to the position and the number of the at least one predetermined resource unit included in each of the at least one resource group.

14. The receiver of claim 12, wherein the control channel is MAP channel for time -frequency resource allocation.

15. The receiver of claim 12, wherein the control channel further includes information about the type of a multiple access channel carrying the data and the control channel recoverer further acquires the type of the multiple access channel.

16. The receiver of claim 15, wherein the multiple access channel is one of a diversity channel and an adaptive modulation and coding (AMC) channel.

17. A transmission method in a broadband wireless communication system comprising the steps of:

generating a control channel including an user information and a resource group information allocated to the user based on position and number of at least one predetermined resource unit included in the resource group which consists of at least one predetermined resource unit; and
allocating the data to resources corresponding to the resource group information.

18. The transmission method of claim 17, wherein the communication system has total time-frequency resources consisting of at least one predetermined resource units, the at least one predetermined resource unit is grouped into at least one resource group, and each of the at least one resource group is identified with a resource group information according to the position and the number of the at least one predetermined resource unit included in each of the at least one resource group.

19. The transmission method of claim 17, wherein the control channel is MAP channel for time -frequency resource allocation.

20. The transmission method of claim 17, wherein the resource group information is sequentially allocated to the total time-frequency resources.

21. The transmission method of claim 17, wherein the number of predetermined resource units in the each of the at least one resource group is one of 1 and an even-divisor of the number of total predetermined resource units.

22. The transmission method of claim 17, wherein the control channel further includes information about the type of a multiple access channel allocated to the user.

23. The transmission method of claim 18, wherein the total time-frequency resources are divided according to multiple access channels and the at least one resource group information is allocated independently for the individual multiple access channels.

24. The transmission method of claim 22, wherein the resource group information is sequentially allocated for each of the multiple access channels.

25. The transmission method of claim 22, wherein the number of the at least one predetermined resource unit included in the each of the at least one resource group is one of 1 and an even-divisor of the number of total predetermined resource units included in the each multiple access channel.

26. The transmission method of claim 22, wherein the multiple access channel is one of a diversity channel and an adaptive modulation and coding (AMC) channel.

27. The transmission method of claim 17, wherein the at least one predetermined resource unit included in the each of the at least one resource group is successive or non-successive.

28. A reception method in a broadband wireless communication system, comprising the steps of:

   recovering a control channel from a received frame and acquiring an user information and a resource group information to which data for the user is allocated; and
   receiving the data according to the user information and the at least one resource group information.

29. The reception method of claim 28, wherein the communication system has total time-frequency resources consisting of at least one predetermined resource units, the at least one predetermined resource unit is grouped into at least one resource group, and each of the at least one resource group is identified with a resource group information according to the position and the number of the at least one predetermined resource unit included in each of the at least one resource group.

30. The reception method of claim 28, wherein the control channel is MAP channel for time —frequency resource allocation.

31. The reception method of claim 28, wherein the control channel further includes information about the type of a multiple access channel carrying the data.

32. The reception method of claim 31, wherein the multiple access channel is one of a diversity channel and an adaptive modulation and coding (AMC) channel.

SUB-CHANNEL LOGICAL
NUMBER (FREQUENCY)

FIG.1
(PRIOR ART)

EP 1 737 155 A1

FIG.2

F

| | | | |
|---|---|---|---|
| 1<br>(25)<br>37<br>⟨43⟩<br>46<br>48 | 7<br>(28) | 13<br>(31)<br>40<br>47 | 19<br>(34) |
| 2 | 8 | 14 | 20 |
| 3<br>(26) | 9<br>(29)<br>39<br>⟨44⟩ | 15<br>(32) | 21<br>(35)<br>42 |
| 4 | 10 | 16 | 22 |
| 5<br>(27)<br>38 | 11<br>(30) | 17<br>(33)<br>41<br>⟨45⟩ | 23<br>(36) |
| 6 | 12 | 18 | 24 |

T

1    (301)

(25)    (303)

37    (305)

⟨43⟩    (307)

46    (309)

48    (311)

# FIG.3

FIG.4

501 ~ UPPER
LAYERS

CHANNEL
ALLOCATOR (505)

503 ~ MAC

507 ~ PHY

TRANSMITTER (500)

517 ~ UPPER
LAYERS

CHANNEL
RECOVERER (515)

513 ~ MAC

511 ~ PHY

RECEIVER (510)

FIG.5

FIG.6A

DIVERSITY CHANNEL RECOVERER 617

AMC CHANNEL RECOVERER 619

OTHER CHANNEL RECOVERER 621

615

MAP CHANNEL RECOVERER 613

PREAMBLE CHANNEL RECOVERER 611

FIG.6B

START

CONSTRUCT MAP CHANNEL
(USER ID'S, CHANNEL
TYPES, AND RESOURCE
GROUP NUMBERS — 701

CHECK MAP CHANNEL
INFORMATION
CORRESPONDING TO
TIME INDEX — 703

705
DIVERSITY CHANNEL
CONSTRUCTED? — NO

YES

709
AMC CHANNEL
CONSTRUCTED? — NO

YES

OTHER CHANNEL
CONSTRUCTED? — 711

707
t=TFr? — NO

YES

SEND FRAME — 713

t = t + 1 — 715

END

FIG.7A

START

RECOVER MAP CHANNEL
(USER ID'S, CHANNEL
TYPES, RESOURCE GROUP
NUMBERS) ~721

CHECK CHANNEL
TYPE AND SET t=0 ~723

725
DIVERSITY CHANNEL
RECEIVED? — NO

YES

729
AMC CHANNEL
RECEIVED? — NO

YES

OTHER CHANNEL RECEIVED ~731

727
$t = T_{grp}$ ? — NO

YES

RECOVER USER DATA ~733

$t = t + 1$ ~735

END

FIG.7B

START

RECEIVE DATA FROM
UPPER LAYERS ~801

DECIDE DATA SIZE ~803

CONSTRUCT MAP CHANNEL
(USER ID'S, SUBCHANNEL TYPES,
RESOURCE GROUP NUMBERS,AND
OTHER CONTROL INFORMATION) ~805

ARRANGE DATA BASED ON
MAP CHANNEL ~807

SEND DATA TO PHY ~809

END

FIG.8

FIG.9

**European Patent Office**

## EUROPEAN SEARCH REPORT

Application Number

EP 06 01 3031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANG ZHANG ET AL: "DL Traffic Channel Definition and Enhanced DL Resource Allocation for OFDMA PHY" IEEE 802.16 BROADBAND WIRELESS ACCESS WORKING GROUP, [Online] 4 November 2004 (2004-11-04), pages 0-6, XP002395999 Retrieved from the Internet: URL:http://www.ieee802.org/16/tge/contrib/C80216e-04_542.pdf#search=%22%22DL%20traffic%20channel%20definition%22%22> [retrieved on 2006-08-23] * page 1 * | 1-32 | INV. H04L5/02 |
| A | GUOQING LI ET AL INSTITUTE OF ELECTRICAL AND ELECTRONICS ENGINEERS: "Downlink dynamic resource allocation for multi-cell OFDMA system" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY : IEEE, US, vol. VOL. 1 OF 2. CONF. 37, 9 November 2003 (2003-11-09), pages 517-521, XP010701724 ISBN: 0-7803-8104-1 * page 517, right-hand column, paragraph II - page 518, right-hand column, paragraph B * | 1-32 | |

TECHNICAL FIELDS SEARCHED (IPC)

H04L

-/--

The present search report has been drawn up for all claims

| Place of search | Date of completion of the search | Examiner |
|---|---|---|
| Munich | 23 August 2006 | Marzenke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

# EP 1 737 155 A1

**European Patent Office**

## EUROPEAN SEARCH REPORT

Application Number

EP 06 01 3031

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | REDANA S ET AL: "Performance evaluation of point-to-multi-point (PMP) and mesh air-interface in IEEE standard IEEE 802.16a" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 3186-3190, XP010787461 ISBN: 0-7803-8521-7 * page 3187, left-hand column * ----- | 1-32 | |
| A | WANG YING ET AL: "Two-dimensional resource allocation for OFDM/TDMA microcellular networks" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 3452-3456, XP010787517 ISBN: 0-7803-8521-7 * page 3452 - page 3453, left-hand column, paragraph B * ----- | 1-32 | TECHNICAL FIELDS SEARCHED (IPC) |

The present search report has been drawn up for all claims

| Place of search | Date of completion of the search | Examiner |
|---|---|---|
| Munich | 23 August 2006 | Marzenke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

**EP 1 737 155 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 200554290